# EUROPÄISCHE PATENTANMELDUNG

(11) **EP 3 650 187 A1**
(43) Veröffentlichungstag der Anmeldung: **13.05.2020**
(21) Anmeldenummer: 18020584.1
(22) Anmeldetag: 08.11.2018
(51) Int. Cl.: B29B 13/02, B01J 3/02, B01J 3/04

(54) **AUTOKLAV MIT EINGEBAUTEM KONUS SOWIE VERWENDUNG UND VERFAHREN ZUR VERWENDUNG**

(71) Anmelder: Linde Aktiengesellschaft, 80331 München (DE); KIMW Anwendungstechnik GmbH, 58507 Lüdenscheid (DE); ProTec Polymer Processing GmbH, 64625 Bensheim (DE)
(72) Erfinder: Kürten, Andreas, 58644 Iserlohn (DE); Sattler, Martin, 68549 Ilvesheim (DE); Heyer, Kerstin, 68535 Edingen-Neckarhausen (DE); Schnell, Hans, 35457 Lollar (DE); Dezsi, Sandor, 85354 Freising (DE)
(74) Vertreter: Gellner, Bernd

(57) **Zusammenfassung**

Die Erfindung betrifft einen Autoklav (1) zur Aufnahme von Schüttgut (P), aufweisend: eine drucktragende Hülle (2), die einen Innenraum (3) des Autoklav (1) umgibt, einen gewölbten Boden (4), der einen unteren Abschnitt der Hülle (2) bildet, und einem am Boden (4) vorgesehenen verschließbaren Auslass (5) zum Entnehmen von im Innenraum (3) befindlichen Schüttgut (P). Erfindungsgemäß ist vorgesehen, dass in einem unteren Abschnitt (3a) des Innenraumes (3) ein konusförmiges Leitelement (6) angeordnet ist, das dazu ausgebildet ist, im Innenraum (3) befindliches Schüttgut (P) zum Auslass (5) zu leiten.

## Beschreibung

Die Erfindung betrifft einen Autoklav.

Autoklave sind Behälter in denen Bauteile und Materialien erhöhten Temperaturen und Drücken ausgesetzt werden können.

Das Design von Autoklaven unterliegt vielfältigen Anforderungen, je nach den zu verwendenden Einsatzparametern, wie z.B. Temperatur, Druck, Anzahl der Prozesszyklen. Insbesondere bei einem vertikal angeordneten Autoklav, der zum Prozessieren von Schüttgut (z.B. in Form eines Granulats) verwendet wird, wobei das Schuttgut in der Regel am Kopfende des Apparats eingeleitet wird und am unteren Ende bzw. Boden abgezogen wird, besteht oftmals die Schwierigkeit, dass aufgrund der gewölbten Form des Bodens der Autoklavhülle das eingefüllte Material nicht vollständig abgezogen werden kann, sondern ein Teil des Materials im Innenraum des Autoklav auf dem Boden liegen bleibt.

Hiervon ausgehend liegt der vorliegenden Erfindung die Aufgabe zugrunde, einen Autoklav bereitzustellen, der hinsichtlich der vorgenannten Problematik verbessert ist.

Dieses Problem wird durch einen Autoklav mit den Merkmalen des Anspruchs 1 gelöst. Vorteilhafte Ausgestaltungen der Erfindung sind in den entsprechenden Unteransprüchen angegeben.

Gemäß Anspruch 1 wird ein Autoklav offenbart, mit:
- einer drucktragenden Hülle, die einen Innenraum des Autoklavs umgibt,
- einem gewölbten Boden, der einen unteren Abschnitt der Hülle bildet, und
- einem am Boden vorgesehenen verschließbaren Auslass zum Entnehmen von im Innenraum befindlichem Schüttgut.

Erfindungsgemäß ist nun vorgesehen, dass in einem unteren Abschnitt des Innenraumes oberhalb des Auslasses ein konusförmiges Leitelement, insbesondere in Form eines Leitblechs, angeordnet ist, das dazu ausgebildet ist, im Innenraum befindliches Schüttgut zum Auslass zu leiten.

Gemäß einer Ausführungsform der Erfindung ist vorgesehen, dass das konusförmige Leitelement eine Innenseite zum Führen des Schüttguts aufweist, die vorzugsweise wie eine Mantelfläche eines Kegelstumpfs geformt ist.

Die Erfindung erlaubt aufgrund des konusförmigen Leitelements das restlose Entladen von Schüttgut aus dem Innenraum des Autoklavs, wobei hinsichtlich der drucktragenden Hülle des Autoklavs weiterhin gewölbte Böden zum Einsatz kommen können, die unter dem Gesichtspunkt der Stabilität und Herstellbarkeit der drucktragenden Hülle oberhalb gewisser Wanddicken bevorzugt sind.

Gemäß einer bevorzugten Ausführungsform der Erfindung ist vorgesehen, dass das Leitelement einen Neigungswinkel im Bereich von 25° bis 50° aufweist, wobei der Neigungswinkel vorzugsweise 35° beträgt. Der Neigungswinkel ist hierbei insbesondere derjenige Winkel, den eine Außenseite des Leitelements, die dem Boden zugewandt ist, mit einer horizontalen Ebene bildet, und zwar bezogen auf einen bestimmungsgemäß angeordneten Autoklav, bei dem sich eine Längsachse eines sich an den Boden anschließenden Mantels der Autoklavhülle entlang der Vertikalen erstreckt. Aufgrund der Konusform des Leitelements ist der Neigungswinkel in Umfangsrichtung des Bodens bzw. des Mantels des Autoklavs konstant.

Weiterhin ist gemäß einer bevorzugten Ausführungsform der Erfindung vorgesehen, dass das Leitelement einen äußeren umlaufenden Randbereich aufweist, über den das Leitelement an einer dem Innenraum zugewandten Innenseite der Hülle des Autoklav festgelegt ist, insbesondere über eine Schweißverbindung.

Weiterhin ist gemäß einer bevorzugten Ausführungsform der Erfindung vorgesehen, dass das Leitelement einen inneren umlaufenden Randbereich aufweist, der eine Öffnung des Leitelementes berandet, wobei sich das Leitelement ausgehend vom äußeren Randbereich hin zum inneren Randbereich konusförmig verjüngt. Das Schüttgut kann somit schwerkraftgetrieben entlang der Innenseite des konusförmigen Leitelements zu der besagten Öffnung rutschen und kann von dort aus dem Auslass des Autoklavs zugeführt werden.

In dieser Hinsicht ist gemäß einer bevorzugten Ausführungsform des Autoklavs vorgesehen, dass der Autoklav ein Rohrstück aufweist, das mit dem inneren Randbereich des Leitelements verbunden ist, insbesondere über eine Schweißverbindung, so dass das konusförmige Leitelement zusammen mit dem Rohrstück einen Trichter bildet, wobei an der Innenseite des Leitelements entlanggleitendes Schüttgut über die Öffnung des Leitelements in das Rohrstück führbar ist.

Weiterhin ist gemäß einer bevorzugten Ausführungsform der Erfindung vorgesehen, dass der Auslass durch einen vom Boden abragenden Stutzen gebildet wird. Hierbei ist des Weiteren vorzugsweise vorgesehen, dass das Rohrstück vom Innenraum her in den Stutzen hineinsteht. Somit kann das Schüttgut über das Leitelement bzw. das sich anschließende Rohrstück direkt in den Stutzen des Autoklavs geführt werden.

Weiterhin kann gemäß einer Ausführungsform der Erfindung vorgesehen sein, dass das Leitelement über zumindest ein Stützelement am Boden abgestützt ist.

Weiterhin ist der Autoklav gemäß einer Ausführungsform der Erfindung vorzugsweise so konfiguriert, dass ein zwischen dem Leitelement und dem Boden angeordneter Abschnitt des Innenraumes des Autoklavs während eines Betriebes des Autoklav druckgleich mit einem oberhalb des Leitelements angeordneten Abschnitt des Innenraumes ist (d.h., zwischen den beiden Innenraumabschnitten ist ein Druckausgleich möglich), so dass das Leitelement mit Vorteil nicht auf hohe Drücke ausgelegt sein muss.

Gemäß einer Ausführungsform der Erfindung kann es sich bei dem gewölbten Boden der drucktragenden Hülle des Autoklavs z.B. um einen der folgenden gewölbten Böden handeln: einen Klöpperboden, einen Korbbogenboden, ein halbkugelförmiger Boden.

Von einem Klöpperboden spricht man insbesondere dann, wenn der Boden bei einem Außendurchmesser D eines sich anschließenden Mantels der Hülle des Autoklavs zwei Krümmungsradien aufweist, nämlich einen ersten Krümmungsradius r₁ am Übergang zum Mantel und einen zweiten Krümmungsradius r₂ für einen mittigen Bereich des Bodens, wobei für die Radien z.B. gilt: r₁ = D und r₂ = 0,1 * D (nach DIN 28011), oder r₁=D und r₂=0,06*D (nach ASME F&D).

Weiterhin spricht man von einem Korbbogenboden insbesondere dann, wenn für die besagten Radien z.B. gilt r₁=0,8*D und r₂=0,154*D (nach DIN 28011). D.h., der Korbbogenboden ist etwas flacher als der Klöpperboden.

Grundsätzlich kann jedoch der Boden des Autoklavs im Rahmen der vorliegenden Erfindung alle technisch sinnvollen Krümmungen bzw. Wölbungsformen aufweisen.

Weiterhin ist gemäß einer bevorzugten Ausführungsform der Erfindung vorgesehen, dass der Autoklav einen Einlass zum Einfüllen von Schüttgut in den Innenraum des Aukoklavs aufweist, wobei der Einlass an einem Kopf des Autoklavs vorgesehen ist, also an einem oberen Endabschnitt der drucktragenden Hülle des Autoklavs.

Ein weiterer Aspekt der vorliegenden Erfindung betrifft eine Verwendung eines erfindungsgemäßen Autoklavs zum Kontaktieren eines im Innenraum des Autoklavs befindlichen Schüttguts mit einem in den Innenraum des Autoklavs eingeleiteten Gas.

Gemäß einer Ausführungsform der Verwendung ist das Gas eines der folgenden Gase oder weist eines der folgenden Gase auf: ein Inertgas, CO₂, N₂, Ar, Xe.

Weiterhin ist gemäß einer Ausführungsform der Verwendung vorgesehen, dass das Schüttgut ein Polymer aufweist, insbesondere durch ein Polymergranulat gebildet ist.

Schließlich betrifft ein weiterer Aspekt der vorliegenden Erfindung ein Verfahren zum Imprägnieren eines Polymergranulats mit einem Gas unter Verwendung eines erfindungsgemäßen Autoklavs, wobei das Polymergranulat vorzugsweise über den besagten Einlass in den Innenraum des Autoklavs eingeleitet wird und dort mit einem Gas kontaktiert wird, wobei das Polymergranulat anschließend über das Leitelement und den Auslass aus dem Innenraum des Autoklavs abgezogen wird.

Gemäß einer Ausführungsform des Verfahrens ist vorgesehen, dass das Polymergranulat bei einer Temperatur im Bereich von -10°C bis 175°C im Innenraum des Autoklavs mit dem Gas kontaktiert wird.

Weiterhin ist gemäß einer Ausführungsform des Verfahrens vorgesehen, dass das Gas beim Kontaktieren des Polymergranulats mit dem Gas im Innenraum des Autoklavs einen Druck im Bereich von 10 bar bis 100bar aufweist.

Weiterhin ist gemäß einer Ausführungsform des Verfahrens vorgesehen, dass das Gas eines der folgenden Gase ist oder eines der folgenden Gase aufweist: ein Inertgas, CO₂, N₂, Ar, Xe.

Das Polymergranulat kann bei einem atmosphärischen Druck in den Innenraum des Autoklavs eingeleitet werden und kann des Weiteren nach dem Kontaktieren mit dem Gas bei einem atmosphärischen Druck aus dem Innenraum des Autoklavs abgezogen werden.

Nachfolgend soll eine bevorzugte Ausführungsform eines erfindungsgemäßen Autoklavs sowie weitere Merkmale und Vorteile der vorliegenden Erfindung anhand der Figuren erläutert werden. Es zeigen:
- Fig. 1: eine schematische Schnittansicht einer Ausführungsform eines erfindungsgemäßen Autoklavs; und
- Fig. 2: eine ausschnitthafte Schnittansicht eines Details des in der Figur 1 gezeigten Autoklavs.

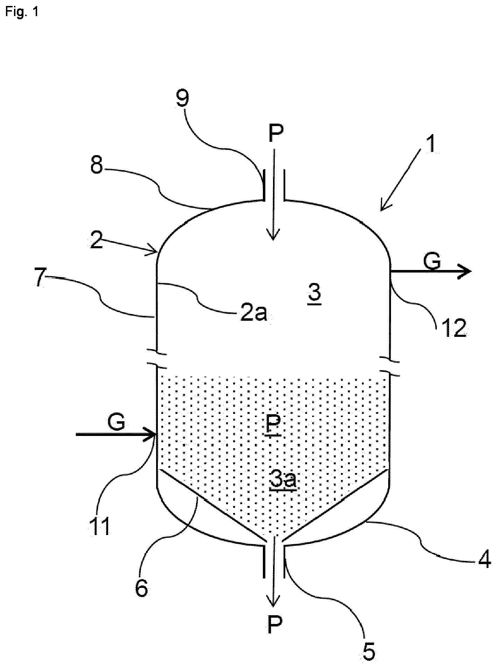

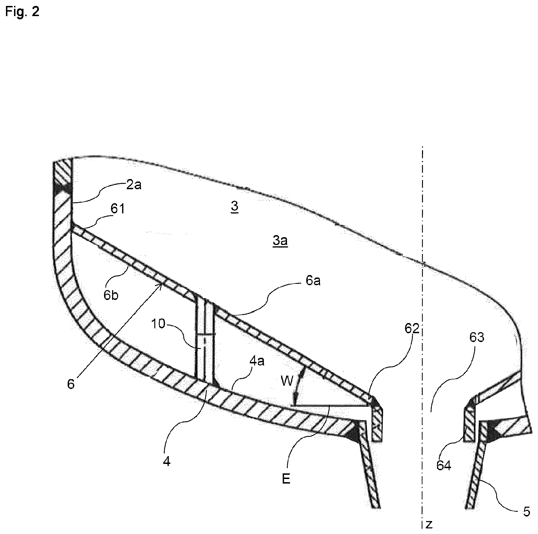

Figur 1 zeigt im Zusammenhang mit der Figur 2 eine Ausführungsform eines erfindungsgemäßen Autoklavs 1 zur Aufnahme von Schüttgut P. Bei dem Schüttgut P kann es sich z.B. um ein Polymergranulat handeln, das mit Hilfe des Autoklavs 1 gemäß dem hierin offenbarten Verfahren bzw. der hierin offenbarten Verwendung (siehe oben) behandelt werden kann.

Der Autoklav 1 weist eine drucktragende Hülle 2 auf, die einen Innenraum 3 des Autoklavs 1 umgibt. Die Hülle 2 weist dabei einen gewölbten Boden 4 auf, der einen unteren Abschnitt der Hülle 2 bildet. An den Boden 2 schließt sich ein Mantel 7 der Hülle 2 an, der sich entlang einer Längsachse z erstreckt, die sich beim Betrieb des Autoklavs 1 vorzugsweise entlang der Vertikalen erstreckt. Am oberen Ende weist die Hülle 2 vorzugsweise einen sich an den Mantel 7 anschließenden Kopf 8 auf, an dem vorzugsweise ein verschließbarer Einlass 9 vorgesehen ist, der z.B. als Stutzen ausgestaltet sein kann. Über den Einlass 9 kann das Schüttgut P in den Innenraum 3 des Autoklavs 1 eingeleitet werden.

Weiterhin weist der Autoklav 1 einen am Boden 4 ausgebildeten verschließbaren Auslass 5 zum Entnehmen von im Innenraum 3 befindlichem Schüttgut P auf. Hierbei kann der Auslass 5 durch einen Stutzen gebildet sein, der z.B. in Richtung der Längsachse z vom Boden 4 nach außen hin absteht.

Um eine restlose Entnahme des Schüttguts P sicherzustellen, ist vorgesehen, dass in einem unteren Abschnitt 3a des Innenraumes 3 oberhalb des Auslasses 5 ein konusförmiges Leitelement 6 angeordnet ist, das dazu ausgebildet ist, im Innenraum 3 befindliches Schüttgut P zum Auslass 5 zu leiten. Hierbei weist das Leitelement 6 vorzugsweise eine als Gleitfläche für das Schüttgut P dienende Innenseite 6a auf, die insbesondere die Form einer Mantelfläche eines Kegelstumpfs aufweist.

Damit das Schüttgut P schwerkraftgetrieben entlang der Innenseite 6a möglichst gut nach unten rutschen kann, ist vorzugsweise vorgesehen, dass das Leitelement 6 einen Neigungswinkel W im Bereich von 25° bis 50° aufweist, wobei der Neigungswinkel vorzugsweise 35° beträgt. Der Neigungswinkel W wird hierbei gemäß Figur 2 von der Außenseite 6b des Leitelements 6, die der Innenseite 4b des Bodens 4 zugewandt ist, und einer horizontalen Ebene E eingeschlossen, und zwar bezogen auf einen bestimmungsgemäß angeordneten Autoklav 1, bei dem sich eine Längsachse z des Mantels 7 der Hülle 2 entlang der Vertikalen erstreckt.

Wie anhand der Figur 2 ersichtlich ist, ist vorzugsweise vorgesehen, dass das Leitelement 6 einen äußeren umlaufenden Randbereich 61 aufweist, über den das Leitelement 6 an einer dem Innenraum 3 zugewandten Innenseite 2a der Hülle 2 des Autoklavs 1 festgelegt ist. Hierbei kann der äußere Randbereich 61 insbesondere an dem Boden 4 festgelegt sein bzw. mit diesem verschweißt sein.

Vom äußeren Randbereich 61 fällt das Leitelement 6 entsprechend seiner Konusform zur Mitte hin bis zu einem umlaufenden inneren Randbereich 62 ab, der eine Öffnung 63 des Leitelements 6 berandet. Über diese Öffnung 63 kann abzuziehendes Schüttgut P in ein Rohrstück 64 gelangen, das an den inneren Randbereich 62 angesetzt ist. Hierbei bilden das Leitelement 6 und das Rohrstück 64 einen Trichter aus, der abschnittsweise vom Innenraum 3 her in den Stutzen 5 hineinsteht. Somit kann beim Abziehen des Schüttguts P das Schüttgut P an der Innenseite 6a des Leitelements 6 direkt in den Stutzen 5 rutschen, so dass ein restloses Entladen des Innenraumes 3 des Autoklavs 1 möglich ist.

Weiterhin kann das Leitelement 6 über zumindest ein Stützelement 10 oder über eine Mehrzahl an Stützelementen 10, die jeweils das Leitelement 6 mit einer Innenseite 4a des Bodens 4 verbinden, an dem Boden 4 abgestützt sein.

Der Autoklav 1 kann insbesondere in der oben beschrieben Weise zum Imprägnieren eines Polymergranulats P mit einem Gas G (oder zum Behandeln eines sonstigen Schüttguts P) verwendet werden. Hierzu wird das Polymergranulat P über den Einlass 9 in den Innenraum 3 des Autoklavs 1 eingeleitet und dort bei einem vordefinierten Druck und einer vordefinierten Temperatur mit einem Gas G beaufschlagt. Der Autoklav 1 kann hierzu einen Gaseinlass 11 und einen Gasauslass 12 aufweisen.

**Bezugszeichenliste**

| | |
|---|---|
| 1 | Autoklav |
| 2 | Hülle |
| 3 | Innenraum |
| 4 | Boden |
| 4a | Innenseite |
| 5 | Auslass bzw. Stutzen |
| 6 | Leitelement |
| 6a | Innenseite |
| 6b | Außenseite |
| 7 | Mantel |
| 8 | Kopf |
| 9 | Einlass bzw. Stutzen |
| 10 | Stützelement |
| 11 | Gaseinlass |
| 12 | Gasauslass |
| 61 | Äußerer Randbereich |
| 62 | Innerer Randbereich |
| 63 | Öffnung |
| 64 | Rohrstück |
| G | Gas |
| P | Schüttgut, insbesondere Polymergranulat |
| W | Neigungswinkel |
| Z | Längsachse |

## Patentansprüche

1. Autoklav (1) zur Aufnahme von Schüttgut (P), aufweisend:
- eine drucktragende Hülle (2), die einen Innenraum (3) des Autoklavs (1) umgibt,
- einen gewölbten Boden (4), der einen unteren Abschnitt der Hülle (2) bildet, und
- einen am Boden (4) vorgesehenen verschließbaren Auslass (5) zum Entnehmen von im Innenraum (3) befindlichem Schüttgut (P),
**dadurch gekennzeichnet,**
**dass** in einem unteren Abschnitt (3a) des Innenraumes (3) ein konusförmiges Leitelement (6) angeordnet ist, das dazu ausgebildet ist, im Innenraum (3) befindliches Schüttgut (P) zum Auslass (5) zu leiten.

2. Autoklav nach Anspruch 1, **dadurch gekennzeichnet, dass** das Leitelement (6) einen Neigungswinkel (W) im Bereich von 25° bis 50° aufweist, wobei der Neigungswinkel vorzugsweise 35° beträgt.

3. Autoklav nach Anspruch 1 oder 2, **dadurch gekennzeichnet, dass** das Leitelement (6) einen äußeren umlaufenden Randbereich (61) aufweist, über den das Leitelement (6) an einer dem Innenraum (3) zugewandten Innenseite (2a) der Hülle (2) des Autoklavs (1) festgelegt ist, insbesondere über eine Schweißverbindung.

4. Autoklav nach Anspruch 3, **dadurch gekennzeichnet, dass** das Leitelement (6) einen inneren umlaufenden Randbereich (62) aufweist, der eine Öffnung (63) des Leitelementes (6) berandet, wobei sich das Leitelement (6) ausgehend vom äußeren Randbereich (61) hin zum inneren Randbereich (62) konusförmig verjüngt.

5. Autoklav nach Anspruch 4, **dadurch gekennzeichnet, dass** der Autoklav (1) ein Rohrstück (64) aufweist, das mit dem inneren Randbereich (63) des Leitelements (6) verbunden ist, so dass das konusförmige Leitelement (6) zusammen mit dem Rohrstück (64) einen Trichter bildet, wobei an der Innenseite (6a) des Leitelements (6) entlanggleitendes Schüttgut (P) über die Öffnung (63) des Leitelements (6) in das Rohrstück (64) führbar ist.

6. Autoklav nach einem der vorhergehenden Ansprüche, **dadurch gekennzeichnet, dass** der Auslass (5) durch einen vom Boden (4) abragenden Stutzen gebildet wird.

7. Autoklav nach den Ansprüchen 5 und 6, **dadurch gekennzeichnet, dass** das Rohrstück (64) vom Innenraum (3) her in den Stutzen (5) hineinsteht.

8. Autoklav nach einem der vorhergehenden Ansprüche, **dadurch gekennzeichnet, dass** das Leitelement (6) über zumindest ein Stützelement (10) am Boden (4) abgestützt ist.

9. Autoklav nach einem der vorhergehenden Ansprüche, **dadurch gekennzeichnet, dass** der gewölbte Boden (4) einer der folgenden Böden ist: ein Klöpperboden, ein Korbbogenboden, ein halbkugelförmiger Boden.

10. Autoklav nach einem der vorhergehenden Ansprüche, **dadurch gekennzeichnet, dass** der Autoklav (1) einen Einlass (9) zum Einfüllen von Schüttgut (P) in den Innenraum (3) des Aukoklavs (1) aufweist, wobei der Einlass (9) an einem Kopf (8) des Autoklavs (1) vorgesehen ist.

11. Verwendung eines Autoklavs (1) nach einem der vorgehenden Ansprüche zum Kontaktieren eines im Innenraum (3) des Autoklavs (1) befindlichen Schüttguts (P) mit einem in den Innenraum (3) des Autoklavs (1) eingeleiteten Gas (G).

12. Verfahren zum Imprägnieren eines Polymergranulats (P) mit einem Gas (G) unter Verwendung eines Autoklavs (1) nach einem der Ansprüche 1 bis 10, wobei das Polymergranulat (P) in den Innenraum (3) des Autoklavs (1) eingeleitet wird und dort mit einem Gas (G) kontaktiert wird, wobei das Polymergranulat (8) anschließend über das Leitelement (6) und den Auslass (5) des Autoklavs (1) aus dem Innenraum (3) des Autoklavs (1) abgezogen wird.

13. Verfahren nach Anspruch 12, wobei das Polymergranulat (P) bei einer Temperatur im Bereich von -10°C bis 175°C im Innenraum (3) des Autoklavs (1) mit dem Gas (G) kontaktiert wird.

14. Verfahren nach Anspruch 12 oder 13, wobei das Gas (G) beim Kontaktieren des Polymergranulats (P) mit dem Gas (G) im Innenraum (3) des Autoklavs (1) einen Druck im Bereich von 10 bar bis 100bar aufweist.

15. Verfahren nach einem der Ansprüche 12 bis 14, wobei das Gas (G) eines der folgenden Gase ist oder eines der folgenden Gase aufweist: ein Inertgas, CO₂, N₂, Ar, Xe.
